# EUROPEAN PATENT APPLICATION

(11) **EP 3 521 728 A1**
(43) Date of publication of application: **07.08.2019**
(21) Application number: 18165428.6
(22) Date of filing: 03.04.2018
(51) Int. Cl.: F24H 1/20, F24H 7/02, F24H 9/00, F24D 3/08, F24D 13/02, F24D 17/00, F24H 1/48

(54) **ELECTRICAL BOILER**

(30) Priority: 05.02.2018 EP 18155126
(71) Applicant: Friedman, Volf, 2650 Edegem (BE)
(72) Inventor: Friedman, Volf, 2650 Edegem (BE)
(74) Representative: Donné, Eddy

(57) **Abstract**

The invention relates to an electric boiler consisting of a tank provided with an inlet for water that needs to be heated and an outlet for heated water, whereby the tank is filled with liquid and provided with at least one internal electrical resistance to heat up said liquid, whereby a sleeve is provided around the electrical resistance. The invention also relates to a heating unit for a central heating system provided with one or more of such electric boilers.

## Description

The present invention relates to an electric boiler for central heating and as a hot water boiler.

Conventional central heating is provided with heating elements in the form of radiators or of a pipe system in the floor or the like for the heating of individual rooms in a building.

Such central heating is further equipped with a pump that circulates water or another medium in a closed circuit through the radiators and is also provided with a heating unit to reheat the water coming back from the radiators before sending it back through the radiators again.

The heating unit is usually a boiler with a burner on gas or another fuel.

A disadvantage of such heating units is that they use a relatively large amount of expensive fuel and are not ecological in use because they produce waste gases that are harmful for the environment and contribute to the greenhouse effect and run the risk of CO poisoning.

Another disadvantage is that the amount of water or other medium that needs to be heated in the heating unit is relatively large, such that heating up the water requires a relatively large amount of available power and takes a relatively long time. Consequently, such central heating therefore shows a relatively large inertia.

Central heating systems that use an electric heat pump are known. However, such heating is relatively expensive and also requires a large amount of available electric power. Moreover, such heating works at low temperatures, such that such heating is characterised by considerable inertia at the start up.

The purpose of the present invention is to provide a solution to the aforementioned and other disadvantages.

To this end, the invention relates to an electric boiler consisting of a tank provided with an inlet for water that has to be heated and an outlet for heated water, whereby the tank is filled with liquid and provided with at least one internal electrical resistance to heat up said liquid, whereby a sleeve is provided around the electrical resistance such that the liquid via convection flows upwards inside the sleeve and downwards outside the sleeve along the inner sides of the tank.

An advantage of a boiler according to the invention is that it works with electrical energy and therefore does not use fossil fuels, but instead of this is able to use renewable electric energy.

Another advantage of such boiler is that heating up the liquid in the heating circuit goes relatively quickly and the boiler only needs limited power to heat up the liquid to the desired temperature. This makes a boiler according to the invention exceptionally suitable to be powered exclusively by green electricity produced by solar panels or wind turbines. The energy savings in this are considerable.

In a preferred embodiment, the tank is double-walled, for example over the entire circumference or at least along part of the sidewalls.

In a preferred embodiment the sleeve is cylindrical.

The advantage of the sleeve is the accelerated heating up of the liquid as well as an energy saving.

In another preferred embodiment the sleeve covers at least part of the electrical resistance.

The electrical resistance is preferably positioned centrally at the bottom of the tank.

Preferably, the electrical resistance is vertically positioned, parallel to the walls of the tank.

Preferably, the sleeve stands on the base of the tank via supports. The supports are preferably attached to the tank.

In a special embodiment the tank contains several electrical resistances, each provided with a sleeve.

In another embodiment the tank contains several electrical resistances provided with one sleeve around the joint resistances.

In a very preferred embodiment the electric boiler is exclusively connected to one or more solar panels and/or wind turbines for its electrical power supply.

The liquid in the tank is preferably water or oil.

In a special embodiment of an electric boiler according to the invention the tank is provided with a heat exchanger along the outer contour.

In a first special embodiment of an electric boiler according to the invention the tank is provided with at least two external circulation pipes along the outer contour that run from the top to the bottom of the tank such that the liquid by convection and internal circulation flows from the top to the bottom in the circulation pipes.

This allows for the liquid in the tank to warm up faster.

In a very special embodiment of an electric boiler according to the invention the tank along the side contour is provided with a double wall.

In a first specific embodiment of an electric boiler according to the invention the water in a heating circuit circulates in or between the double wall of the tank from the inlet to the outlet of the boiler, whereby the water in the double wall is heated by the liquid in the boiler.

In a second specific embodiment of an electric boiler according to the invention the liquid of a circuit circulates via a preferably spiral-shaped pipe through the tank from the inlet to the outlet of the boiler, whereby the water in the pipe is heated by the liquid in the boiler.

The liquid in the heating circuit is preferably water.

In a second aspect the invention relates to a heating unit for a central heating with radiators or other heating elements that are connected to a circuit where hot liquid coming from an outlet of the heating unit is circulated and returned to an inlet of the heating unit, whereby the heating unit is provided with at least one electric boiler as described above.

In a first specific embodiment the heating unit is provided with at least two double-walled boilers arranged in series as described above.

In another specific embodiment the heating unit is provided with at least two electric double-walled boilers arranged in series provided with external circulation pipes as described above.

In another embodiment the heating unit is also provided with a post-heating tank.

In another embodiment the heating unit is provided with one or more additional heating circuits which are all connected with an inlet, respectively an outlet, to said inlet, respectively outlet of the boiler.

In yet another embodiment the electric boiler is a hot water boiler provided with a supply line at the bottom of the tank to just above the electrical resistance and a drainpipe from the top of the tank to the bottom.

In a third aspect the invention relates to a central heating system provided with a heating unit as described above.

The invention also relates to central heating with an electric boiler according to the invention, whereby the central heating is exclusively connected to one or more solar panels and/or wind turbines for its electrical power supply.

The invention also relates to a hot water circuit provided with an electric boiler according to the invention.

Thus, the central heating and the hot water circuit is completely independent from the availability of fossil fuel and a very quick and efficient heating is guaranteed.

Finally the invention also relates to a method to heat up a liquid in an electric boiler consisting of a tank provided with an inlet for water that needs to be heated and an outlet for heated water, whereby the inlet and the outlet are connected by a pipe that runs through the tank or whereby the inlet and the outlet are connected via the double wall, or whereby the inlet and the outlet are not connected, whereby the tank is filled with liquid and provided with at least one internal electrical resistance to heat up said liquid, whereby a sleeve is provided around the electrical resistance, whereby the liquid is heated by the resistance and via convection flows upward inside the sleeve and downward outside the sleeve along the insides of the tank.

In an alternative method the downward convection movement of the liquid is partly outside the tank in circulation pipes that run from the top to the bottom of the tank.

With the intention of better showing the characteristics of the invention, a preferred embodiment of an electric boiler is described hereinafter, by way of an example without any limiting nature, with reference to the accompanying drawings wherein:
figure 1 schematically shows a traditional diagram of a central heating with a heating unit;
figure 2 schematically shows an embodiment of an electric boiler according to the invention;
figure 3 shows another embodiment of an electric boiler according to the invention;
figure 4 shows an embodiment of an electric hot water boiler according to the invention;
figure 5 shows an embodiment of a central heating 1 according to the invention for large(r) living spaces;
figure 6 shows an embodiment of a central heating 1 according to the invention for small(er) living spaces.

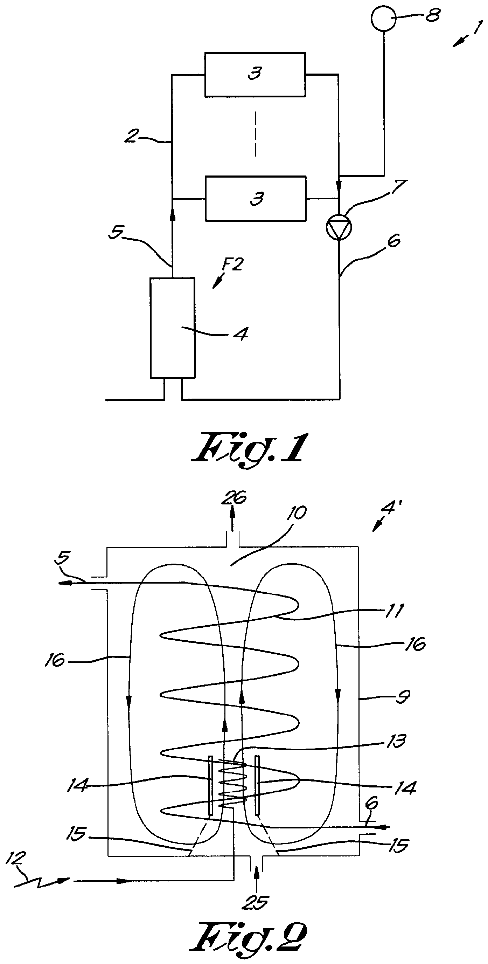

According to the traditional diagram of a central heating 1 according to figure 1 the circuit 2 of the central heating with radiators 3 or other heating elements is connected to a heating unit 4 with an outlet 5 for the supply of hot water to the radiators 3 and an inlet 6 for drainage or return of the water coming from the radiators 3.

A circulating pump 7 from the circuit 2 of the central heating 1 consecutively circulates the water in the circuit 2 through the radiators 3 and subsequently through the electric boiler 4 to reheat the water that cooled down in the radiators 3 before sending it through the radiators 3 again.

In the known manner the circuit 2 of the central heating is fitted with an expansion tank 8.

A possible embodiment of a heating unit 4 according to the invention is shown in figure 2.

This heating unit 4 comprises an electric boiler 4' consisting of a cylindrical tank 9 which is practically completely filled with a liquid 10, preferably water or oil. The electric boiler 4' is at normal pressure and contains preferably as little as possible to no air.

The tank 9 is provided with an inlet 25 at the bottom and an outlet 26 at the top. This is how the liquid 10 in the tank 9 is added. These inlets and outlets can also be connected to the inlets and outlets of other tanks 9 and/or connected to a circulating pump. In a post-heating tank the liquid 10 can possibly be extra heated again.

The electric boiler 4' is provided with an outlet 5 for the supply of hot water to the radiators 3 and with an inlet 6 for the drainage or return of the cooled down water coming from the radiators 3. In the boiler 4' the inlet 6 is connected to the outlet 5 via pipes 11 which in spiral form go through the tank 9.

The electric boiler 4' is provided with a converter (not shown) which is connected to the mains 12 or provided with power 12 via alternative energy such as e.g. solar panels.

In the tank 9 an electrical resistance 13 or another electric heating element is provided to heat up the liquid 10 in the tank 9. Around the electrical resistance 13 a sleeve 14 is provided at a certain distance from the resistance. At least the entire height of the electrical resistance 13 is surrounded by the sleeve 14.

The electrical resistance 13 and the sleeve 14 are upright in the tank 9 whereby the sleeve 14 contains an opening at the bottom and at the top for the liquid 10 to flow through. Preferably, the sleeve 14 is positioned on the base of the tank 9 via supports 15. These are made in such a way that they do not interfere with the circulation of the liquid 10 in the tank 9.

The electrical resistance 13 is typically spiral-shaped and is located centrally at the bottom of the tank 9.

In its most simple form the sleeve 14 is cylindrical and is located around the spiral-shaped electrical resistance 13. The sleeve 14 has an opening at the bottom and at the top for the circulation of liquid 10.

The sleeve 14 preferably consists of a solid wall. The inner wall of the sleeve 14 can be a smooth surface, or provided with notches, ribs or other bulges which conduct the rising liquid 10 even better along the resistance. The outer wall of the sleeve 14 preferably has a smooth surface.

The operation of the electric boiler 4' is simple and as follows. The liquid 10 in the tank 9 is heated by the electrical resistance 13. The liquid 10 closest to the electrical resistance 13 heats up quickest. The sleeve 14 around the electrical resistance 13 causes an upward movement of the heated liquid 10 along the electrical resistance 13 inside the sleeve 14. This causes convection 16 whereby the liquid 10 will make a central upward movement to the top of the tank 9 and descends again along the walls of the tank 9. Such circulation of the liquid 10 speeds up the heating process and thus consumes less energy.

As a result of the heating liquid 10, the water that flows in the pipes 11 is heated and sent through the radiators 3. The spiral-shaped pipes 11 with circuit liquid run through the convection flow 16 of the electrical resistance 13.

Via the radiators 3 the heat of the water is released to the surroundings such that the water that is returned to the inlet 6 of the electric boiler 4' has a lower temperature than the water that leaves the outlet 5 of the electric boiler 4'.

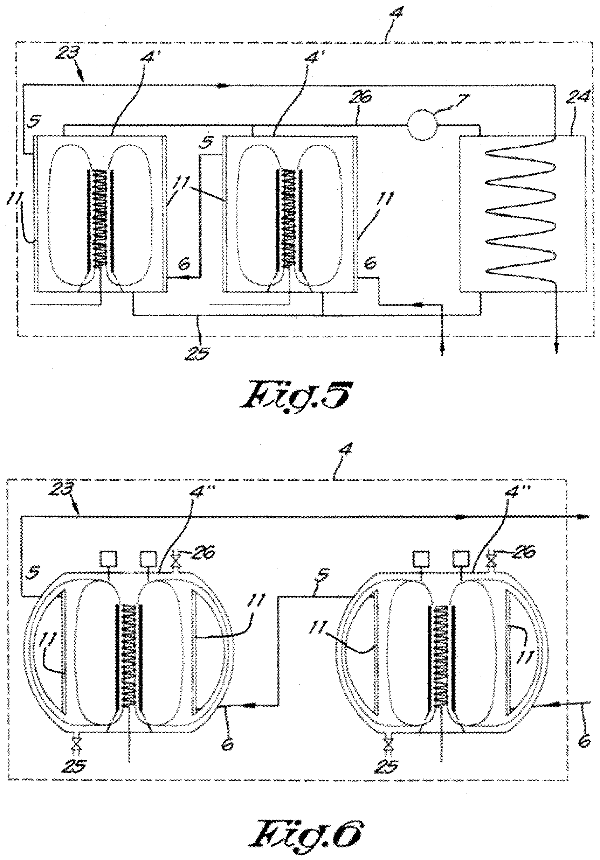

In an alternative embodiment of an electric boiler 4' of figure 2 the tank 9 is double-walled on the sides (as shown in the tanks 4' of figure 5).

In yet another embodiment no pipes 11 are provided in the boiler, but the water is sent between or in the double wall via an inlet 6 and leaves the tank 9 via an outlet 5. The water in the double wall is thus heated by the liquid 10 in the tank 9. The double wall is provided over the entire circumference of the tank 9.

The energy 12 needed for the operation of the electric boiler 4' can be supplied, for example, by wind turbines, solar cells or the like. For solar cells a combined surface of, for example, approximately 7 m² per 1000 Watt must be taken into account. Each electrical resistance 13 supplies approximately 1200 to 1500 Watt.

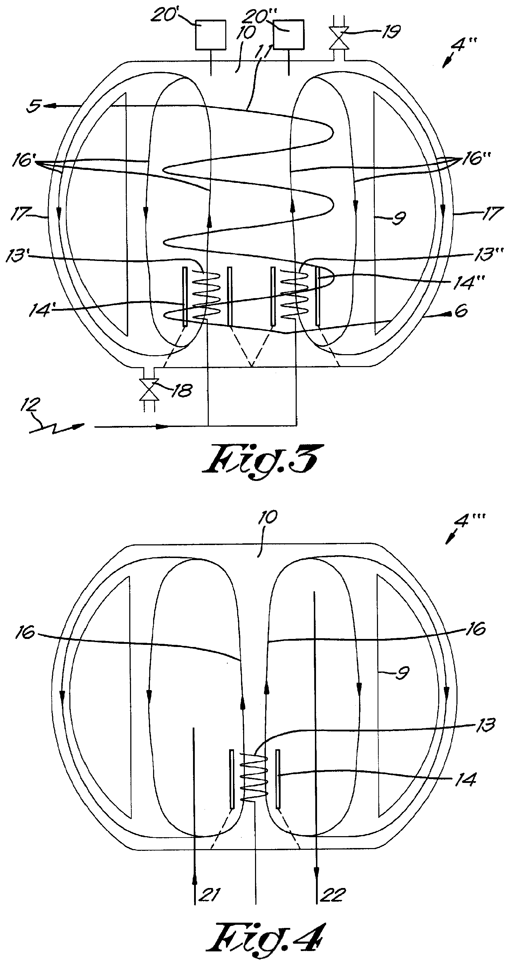

The example of figure 3 shows yet another embodiment of an electric boiler 4' according to the invention that differs from the embodiment of figure 2 in that in this case the side of the tank 9 comprises two or several circulation pipes 17, distributed over the contour of the tank 9, which provides an extra boost for the circulation 16 of the heating up liquid 10. In addition, the descending liquid 16 can return via the circulation pipes 17 to the electrical resistance 13 at the bottom of the tank 9. This internal circulation stimulates the heating.

The circulation pipes 17 are outside the tank 9 and are connected with the tank 9 via openings at the top and the bottom of the tank 9. In this example the circulation pipes are curved. The circulation pipes 17 can also run parallel with the tank 9.

In this embodiment with circulation pipes 17 the tank 9 can also be double-walled.

Figure 3 also shows a tank 9 provided with two electrical resistances 13', 13", each provided with a sleeve 14', 14" around it. This causes two upward heating liquid flows 16', 16" and accelerates the heating process even more or a larger amount of liquid 10 can be heated in the same amount of time. The spiral-shaped pipes 11 with circuit liquid run through the convection flows 16', 16" of both electrical resistances 13', 13".

The extra electrical resistance 13', 13" and accompanying sleeves 14',14" result in an additional heating of the water of the circuit 2 of the central heating 1, such that this water is heated even faster and with less external losses, which benefits the global yield of the central heating 1 and moreover results in a faster response time when, for example, the temperature in the spaces that need to be heated suddenly drops or the user suddenly requests a higher temperature.

The embodiment of figure 3 with circulation pipes 17 is also possible with one electrical resistance 13 of course.

The embodiment of figure 3 with circulation pipes 17 can also be done with a double-walled tank 9.

It is clear that the electric boiler 4", depending on the volume to be heated can be optimised by the choice of the number of electrical resistances 13 from one to several and the choice of the volume and of the power of the boiler 4".

It is also clear that the liquid in the heating circuit 2 does not necessarily have to be water, but that for example oil or another liquid can also be used.

The tank 9 is provided with a drain tap 18 the bottom to empty the liquid 10 in the tank 9 in the event of repairs for example. At the top the tank is provided with a filling tap 19 to fill the tank 9 with liquid 10, or to top it up.

The electric boiler 4" is also provided with one or more thermostats 20', 20", one per electrical resistance 13', 13", which interrupt the power supply of the electrical resistance(s) as soon as a set temperature of, for example, 60°C has been reached.

The heating circuit is also provided with a safety thermostat (not shown) that is applied just upstream of the inlet in the heating circuit and which interrupts the general power supply of the electrical resistance(s) 13', 13" as soon as a set temperature of for example 80°C has been reached, this for the general protection of the central heating 1 to prevent damage in the event of the temperature rising too much, e.g. in the event of a thermostat being defective.

An electric boiler 4'4" according to the invention is both applicable for new construction and for renovation, whereby an old boiler on gas or another power source can simply be replaced by an electric boiler according to the invention.

Figure 4 shows the use of an electrical resistance 13 with sleeve 14 in an electric hot water boiler 4"' according to the invention. The (cold or cooled) water supply 21 from the bottom of the tank ends just above the electrical resistance 13 where the liquid 10 is heated by convection 16 and the hot liquid rises. The water drainpipe 22 runs from the top of the tank 9 (hottest water) to the bottom of the tank 9. In the figure, the tank 9 is provided with circulation pipes 17 along the sidewalls of the tank 9, but this is optional. The electric hot water boiler can also be made double-walled.

Figure 5 shows an embodiment of a central heating 1 for a dwelling of e.g. 120 à 130 m² living space.

The heating unit 23 consists of two double-walled electric boilers 4' arranged one behind the other in series, whereby the outlet 5 of the first boiler is connected to the inlet 6 of the second boiler. The water of the central heating is heated in the double wall of the boilers.

The heating unit 23 is further provided with a post-heating tank 24, also arranged in series, whereby the inlet 6 of the post-heating is connected with the outlet 5 of the second boiler. The heated water from the two boilers 4' is extra heated in the post-heating tank 24 in a spiral-shaped pipe.

The three heating elements are connected in a closed circuit: the inlets 25 and respectively the outlets 26 are connected. A circulating pump 7 ensures the necessary circulation of water or oil in the closed circuit.

The cooled liquid of the central heating enters via channel 6 and is then consecutively heated by the electrical resistance 13 of the two serially arranged electric boilers 4'. Typically, this is 1200-1500 watt. The electrical elements are provided with thermostats up to 65-70 degrees Celsius.

The cooled liquid in the central heating 1 circulates through the first and subsequently the second boiler 4' and is then heated extra in the after-heater 24 before being directed through the radiators 3.

In an example embodiment the boiler 4' has a height of 300 mm and a diameter of 145 mm. The double wall takes a space of 10 mm. The sleeve 14 is 150 mm in height and has a diameter of 70 mm. The sleeve is at 80 mm from the bottom from the tank 9. The electrical resistance 13 depends along the content of the tank 9. The sleeve is preferably somewhat shorter than the electrical resistance 13.

Figure 6 shows an alternative embodiment of a central heating system 1 for, for example, a smaller space, such as a one bedroom flat.

The heating unit 23 here consists of two double-walled electric boilers 4" with external circulation pipes 17 arranged one behind the other in series, whereby the outlet 5 of the first boiler is connected to the inlet 6 of the second boiler. The liquid 10 in the tank kan flow faster because of the circulation pipes.

The cooled down water of the radiators 3 circulates consecutively through the double wall of each of the two boilers 4" after which the heated water is directed via the outlet 5 of the second boiler through the radiators. The heated water from the first boiler is extra heated by the second boiler.

The present invention is by no means limited to the embodiments described as an example and shown in the drawings, but an electric boiler according to the invention as defined by the claims can be realised according to all kinds of variants without departing from the scope of the invention.

## Claims

1. Electric boiler (4',4",4"') consisting of a tank (9) provided with an inlet (6,21) for water that needs to be heated and an outlet (5,22) for heated water, whereby the tank (9) is filled with liquid (10) and is provided with at least one internal electrical resistance (13) to heat up said liquid (10), **characterised in that** a sleeve (14) is provided around the electrical resistance (13) such that the liquid (10) via convection flows upwards inside the sleeve (14) and downwards outside the sleeve along the inner sides of the tank (9).

2. Electric boiler (4',4",4"') according to claim 1, **characterised in that** the tank (9) is double-walled, at least along part of the sidewalls.

3. Electric boiler (4',4",4"') according to claim 1 or 2, **characterised in that** the sleeve (14) is cylindrical.

4. Electric boiler (4',4",4"') according to any one of the previous claims, **characterised in that** the sleeve (14) covers at least part of the electrical resistance (13).

5. Electric boiler (4',4",4"') according to any one of the previous claims, **characterised in that** the electrical resistance (13) and the sleeve (14) are positioned centrally at the bottom of the tank (9).

6. Electric boiler (4',4",4"') according to any one of the previous claims, **characterised in that** the electrical resistance (13) is placed preferably vertically, parallel to the walls of the tank.

7. Electric boiler (4',4",4"') according to any one of the previous claims, **characterised in that** the sleeve (14) is supported on the base of the tank (9) via supports (15).

8. Electric boiler (4',4",4"') according to any one of the previous claims, **characterised in that** the tank (9) contains several electrical resistances (13', 13"), each provided with a sleeve (14', 14").

9. Electric boiler (4',4",4"') according to any one of the previous claims, **characterised in that** the liquid (10) in the tank (9) is water or oil.

10. Electric boiler (4',4",4"') according to any one of the claims 2 to 9, **characterised in that** the liquid of a circuit (2) circulates in the double wall of the tank (9) from the inlet (6) to the outlet (5) of the boiler (4), whereby the liquid in the double wall is heated by the liquid (10) in the boiler (4).

11. Electric boiler (4',4",4"') according to any one of the previous claims, **characterised in that** the liquid of a circuit (2) circulates via a spiral-shaped pipe (11) through the tank (9) from the inlet (6) to the outlet (5) of the boiler (4), whereby the liquid in the pipe (11) is heated by the liquid (10) in the boiler (4).

12. Electric boiler (4',4",4"') according to any one of the previous claims, **characterised in that** the tank (9) on the outer contour is provided with one or more external circulation pipes (17) provided from the top to the bottom of the tank (9).

13. Heating unit (23) for a central heating (1) with radiators (3) or other heating elements that are connected to a circuit (2) where warm liquid from an outlet (5) of the heating unit (23) is circulated and returned to an inlet (6) of the heating unit (23), **characterised in that** the heating unit (23) is provided with at least one electric boiler (4',4",4"') according to any one of the claims 1 to 12.

14. Heating unit (23) according to claim 13, **characterised in that** the heating unit (23) is provided with at least two electric boilers arranged in series (4',4",4"') according to any one of the claims 1 to 12.

15. Heating unit (23) according to claim 13 or 14, **characterised in that** the heating unit (23) is also provided with a post-heating tank (24).
